# FASCICULE DE BREVET EUROPEEN

(11) **EP 2 588 263 B1**
(45) Date de publication et mention de la délivrance du brevet: **07.09.2016**
(21) Numéro de dépôt: 11743281.5
(22) Date de dépôt: 01.07.2011
(51) Int. Cl.: B22F 3/105, B29C 67/00, B23P 15/02, B22F 5/04, B22F 3/00, F01D 5/14

(54) **PROCÉDÉ DE FABRICATION D'UNE PIÈCE MÉTALLIQUE PAR FUSION SÉLECTIVE D'UNE POUDRE**
VERFAHREN ZUR HERSTELLUNG EINES METALLTEILS DURCH SELEKTIVE SCHMELZUNG EINES PULVERS
PROCESS FOR MANUFACTURING A METAL PART BY SELECTIVELY MELTING A POWDER

(30) Priorité: 01.07.2010 FR 1055281
(43) Date de publication de la demande: 08.05.2013
(73) Titulaire: Snecma, 75015 Paris (FR)
(72) Inventeur: MOTTIN, Jean-Baptiste, F-77550 MOISSY CRAMAYEL Cedex (FR); MEREAUX, Beryl, Cassandre, Anne, F-77550 MOISSY CRAMAYEL Cedex (FR); JOBEZ, Sophie, Martine, F-77550 MOISSY CRAMAYEL Cedex (FR); CHANTOISEAU, Olivier, F-77550 MOISSY CRAMAYEL Cedex (FR); LE RAZER, Bruno, Thatcham RG194PN (GB)
(74) Mandataire: Ramey, Daniel
(86) Numéro de dépôt international: PCT/FR2011/051543
(87) Numéro de publication internationale: WO 2012/001324

(56) Documents cités:
- EP-A1- 1 614 526
- EP-A1- 2 022 622
- US-A- 5 897 825
- US-A1- 2007 163 114
- US-A1- 2008 014 457

## Description

La présente invention concerne un procédé de fabrication d'une pièce métallique par fusion sélective d'une poudre à l'aide d'un faisceau laser ou d'un faisceau d'électrons, un tel procédé étant également connu sous les noms de Direct Metal Laser Sintering ou Electron Beam Melting.

On connaît dans la technique un procédé qui consiste à fabriquer une pièce par fusion de couches successives de poudre au moyen d'un faisceau laser ou d'un faisceau d'électrons commandé par un système de traitement de l'information dans lequel on a enregistré les coordonnées tridimensionnelles des points des couches successives à réaliser. De façon pratique, on dispose dans une cuve dont le fond est formé par un plateau mobile en translation, une première couche de poudre à l'aide d'un racleur. La couche présente alors une surface inférieure correspondant à la surface du plateau et une surface supérieure sur laquelle est dirigé et déplacé le faisceau laser ou le faisceau d'électrons. L'énergie apportée par ce faisceau provoque la fusion locale de la poudre qui, en se solidifiant, forme une première couche de la pièce métallique.

Après formation de cette première couche, le plateau est descendu d'une distance correspondant à l'épaisseur d'une couche, puis une seconde couche de poudre est amenée par le racleur sur la couche précédente. De la même manière que précédemment, une seconde couche de la pièce métallique est formée à l'aide du faisceau.

Ces opérations sont répétées jusqu'à fabrication complète de la pièce.

Ce procédé peut notamment être utilisé pour la réalisation de pièces ayant des épaisseurs de paroi faibles, c'est-à-dire comprises entre 0,1 et 5 mm par exemple.

Dans ce cas toutefois, en fonction de sa géométrie, la pièce à réaliser peut présenter des déformations par rapport à la géométrie de référence ou une rugosité supérieure aux spécifications. En effet, lorsque l'on chauffe localement de la poudre, pour chaque couche, des déplacements peuvent se produire au niveau des zones d'interface entre la partie fusionnée ou frittée et le reste de la poudre qui est fluide, engendrant une déformation ou une rugosité excessive de la pièce.

Les déformations ou distorsions ont pour origine les contraintes résiduelles liées aux gradients thermiques. La rugosité excessive est liée à l'interaction entre la couche inférieure (poudre ou zone précédemment fondue), le bain liquide et la gravité.

Ce phénomène est encore amplifié sur les surfaces de la pièce qui sont tournées vers le bas. En particulier, plus l'angle entre la surface tournée vers le bas et le plan horizontal est faible, plus la rugosité de cette surface de la pièce sera importante.

Un des problèmes importants est l'hétérogénéité de la rugosité en fonction de l'orientation des surfaces à construire. Il convient donc d'améliorer et d'homogénéiser la rugosité.

Afin de limiter le phénomène précité, on a proposé de réaliser la pièce avec de fortes épaisseurs, pour obtenir après usinage une conformité géométrique et de fabriquer la pièce avec des raidisseurs que l'on retire ensuite par usinage.

Toutefois, les opérations d'usinage sont longues et coûteuses et peuvent générer des déformations géométriques locales de la pièce au niveau des zones usinées.

Le document EP 2 022 622 divulgue un procédé de fabrication d'une pièce par fusion sélective d'une poudre conformément au préambule de la revendication 1.

L'invention a notamment pour but d'apporter une solution simple, efficace et économique à ce problème.

A cet effet, elle propose un procédé de fabrication d'une pièce métallique par fusion sélective d'une poudre, selon la revendication 1.

De cette manière, la pièce est maintenue en position par l'élément de support tout au long de sa fabrication, évitant ainsi toute déformation néfaste de la pièce, grâce à la couche de poudre maintenue entre la pièce et l'élément, qui a également pour effet de limiter la rugosité de la surface correspondante de la pièce.

Enfin, la pièce étant distincte de l'élément de support et de maintien, c'est-à-dire non relié rigidement ou mécaniquement à cet élément, il n'est pas nécessaire de les séparer par usinage, ce qui évite les inconvénients exposés plus haut.

Le support est de préférence situé en regard d'une surface inclinée et tournée vers le bas.

Selon une caractéristique de l'invention, l'élément de support est écarté de la pièce d'une distance comprise entre 50 et 500 µm.

Si cette distance est trop importante, l'élément de support et de maintien n'a plus d'effet et la rugosité de la pièce au niveau de sa surface tournée vers le bas est importante.

A l'inverse, si cette distance est trop faible, la rugosité n'est plus réduite car il existe des risques de collage ponctuel, voire de collage complet de l'élément de support et de maintien.

Selon l'invention, la distance entre l'élément de support et de maintien et la pièce est déterminée à partir d'un abaque, en fonction de paramètres choisis, tels que la rugosité de la pièce à obtenir.

De manière préférée, la pièce métallique, l'élément de support et le plateau sont soumis à un traitement thermique de libération des contraintes avant leur séparation.

On évite ainsi les déformations de la pièce qui seraient dues à des contraintes résiduelles, lors de sa séparation avec le plateau.

Avantageusement, le traitement thermique de libération des contraintes consiste à chauffer la pièce métallique, l'élément et le plateau à une température inférieure à la température de frittage de la poudre métallique, pendant une durée déterminée.

Bien qu'il soit possible de retirer en grande partie la poudre située entre la pièce et l'élément, une faible quantité de poudre peut rester piégée dans cet intervalle. La caractéristique précitée permet alors d'éviter que la poudre se fixe sur la pièce par frittage lors du traitement de libération des contraintes.

Selon une autre caractéristique de l'invention, deux éléments de maintien et de support sont formés couche par couche, en même temps que la pièce, de part et d'autre de la pièce, lesdits éléments étant écartés de la pièce et séparés de celle-ci par un intervalle rempli de poudre non fondue ou non frittée.

Une paroi de la pièce peut ainsi être maintenue de part et d'autre par des éléments de support, ce qui réduit les risques de déformation lors de sa fabrication. Les rugosités de chacune des surfaces de la pièce situées en regard des éléments de support sont également améliorées, ainsi que l'homogénéité de la rugosité de la pièce.

Selon un mode de réalisation de l'invention, la pièce et les éléments sont construits couche par couche par fusion sélective de la poudre à l'aide d'un faisceau laser, la poudre présentant une granulométrie moyenne comprise entre 10 et 50 µm.

Selon un autre mode de réalisation de l'invention, la pièce et les éléments sont construits couche par couche par fusion sélective de la poudre à l'aide d'un faisceau d'électrons, la poudre présentant une granulométrie moyenne comprise entre 50 et 100 µm.

L'énergie dégagée par un faisceau d'électrons étant supérieure à celle dégagée par un faisceau laser, la taille des grains doit être adaptée.

La pièce peut être séparée du plateau par découpage au fil par électroérosion. En outre, lors du traitement thermique de libération des contraintes, les deux éléments sont maintenus en position l'un par rapport à l'autre à l'aide d'au moins une bride ou d'un serre-joint, réalisé avec la pièce par fusion sélective de poudre.

De préférence, après séparation de la pièce et du plateau, la pièce subit un traitement de finition. Il peut notamment s'agir d'un traitement de tribofinition.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique d'une installation de fabrication d'une pièce métallique par fusion sélective d'une poudre, pour l'exécution du procédé selon l'invention ;
- la figure 2 est une vue partielle et en perspective d'un secteur de redresseur d'une turbomachine ;
- la figure 3 est une vue schématique en coupe transversale montrant le positionnement des pales du secteur de redresseur de la figure 2 et des éléments de support correspondants, après formation complète des pales selon le procédé de l'invention ;
- la figure 4 est une vue illustrant la fixation des éléments l'un à l'autre à l'aide de brides ou de serre-joints ;
- la figure 5 est un abaque.

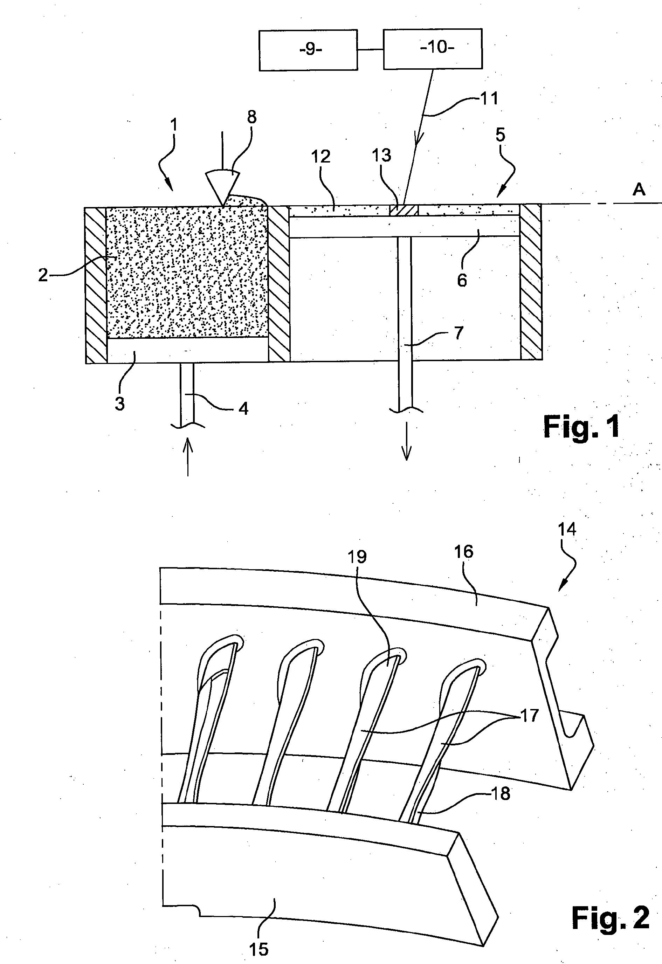

Une installation de fabrication d'une pièce métallique par fusion sélective d'une poudre est représentée à la figure 1. Elle comporte un réservoir 1 contenant une poudre métallique 2 et dont le fond 3 est mobile et déplaçable en translation par une tige 4 d'un vérin, et une cuve voisine 5 dont le fond est constitué par un plateau mobile 6, également déplaçable en translation par une tige 7 d'un vérin.

L'installation comporte en outre un racleur 8 permettant d'amener de la poudre du réservoir 1 vers la cuve 5, par déplacement le long d'un plan horizontal A, et des moyens 9 de génération d'un faisceau laser ou d'un faisceau d'électrons, couplés à un dispositif 10 permettant d'orienter et de déplacer le faisceau 11.

Les étapes de fabrication d'une pièce métallique à l'aide de cette installation sont les suivantes.

Tout d'abord, le fond 3 du réservoir 1 est déplacé vers le haut de manière à ce qu'une certaine quantité de poudre 2 soit située au-dessus du plan horizontal A. Le racleur 8 est alors déplacé de la gauche vers la droite, de manière à racler ladite couche de poudre 2 issue du réservoir 1 et l'amener dans la cuve 5. La quantité de poudre 2 et la position du plateau 6 sont déterminées de façon à former une couche 12 de poudre d'une épaisseur choisie et constante.

Un faisceau laser ou un faisceau d'électrons 11 balaye ensuite une zone déterminée de la couche 12 formée dans la cuve 5, de manière à fusionner localement la poudre 2, dans la zone balayée. Les zones fondues se solidifient de manière à former une première couche 13 de la pièce à fabriquer, cette couche 13 ayant par exemple une épaisseur de 10 à 100 µm.

Le plateau 6 est alors descendu puis une seconde couche de poudre 2 est amenée, de la même manière que précédemment, sur la première couche de poudre. Par déplacement contrôlé du faisceau 11, une seconde couche de la pièce métallique est formée sur la première couche 13.

Ces opérations sont répétées jusqu'à la réalisation complète de la pièce.

Dans le cas où la pièce est construite couche par couche par fusion sélective de la poudre 2 à l'aide d'un faisceau laser, la poudre 2 présente une granulométrie moyenne comprise entre 10 et 50 µm.

Dans le cas où la pièce est construite couche par couche par fusion sélective de la poudre 2 à l'aide d'un faisceau d'électrons, la poudre 2 présente une granulométrie moyenne comprise entre 50 et 100 µm.

L'invention vise à utiliser un tel procédé pour la fabrication de pièces ayant des parois minces, c'est-à-dire d'épaisseur comprise entre 0,1 et 5 mm, en particulier pour la fabrication de pièces d'une turbomachine, telles que des aubes, des secteurs de redresseur de compresseur, des secteurs de distributeur de turbine, des bords d'attaques d'aubes de soufflante, etc...

Un secteur de redresseur 14 est représenté partiellement à la figure 2. Il comporte deux viroles coaxiales, respectivement interne 15 et externe 16, reliées par des pales 17 s'étendant radialement.

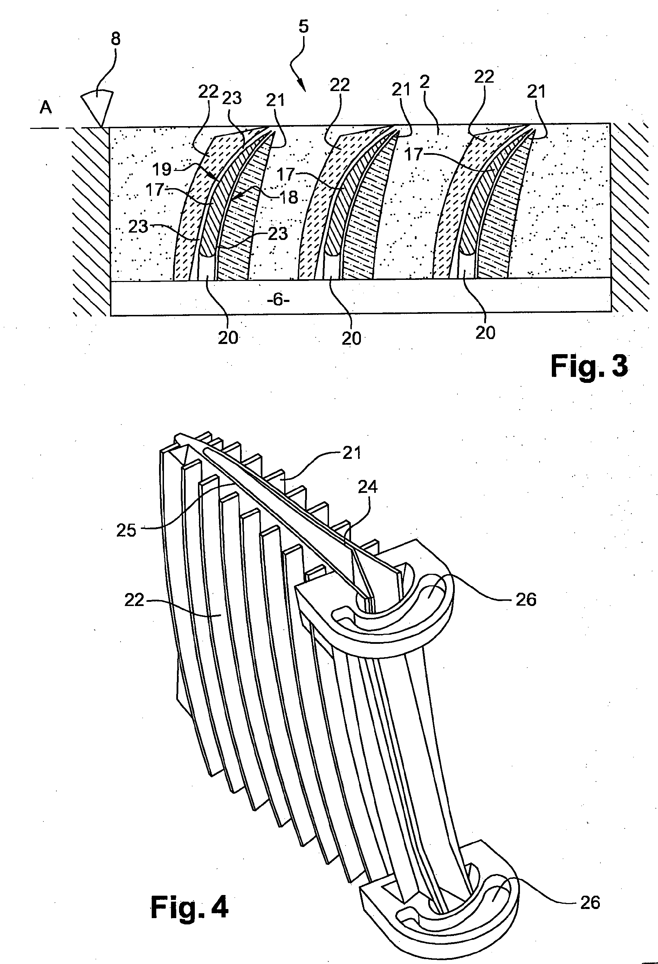

La figure 3 illustre, en coupe transversale, des pales 17 réalisées par le procédé selon l'invention. Chaque pale 17 présente une surface d'intrados 18 concave et une surface d'extrados 19 convexe. La surface d'intrados 18 est tournée vers le bas, c'est-à-dire en direction du plateau 6, alors que la surface d'extrados 19 est tournée vers le haut.

Le procédé selon l'invention consiste à former couche par couche, à partir du plateau 6 ou d'un support 20 fixé sur le plateau 6, de la manière indiquée précédemment, non seulement les pales 17 mais également deux éléments de maintien et de support 21, 22 pour chaque pale, disposés de part et d'autre de celle-ci, c'est-à-dire respectivement en regard des surfaces d'intrados 18 et d'extrados 19, lesdits éléments 21, 22 étant écartés de la pale correspondante et séparés de celle-ci par un intervalle 23 rempli de poudre 2 non fondue. Cela signifie notamment que les pales et les éléments de support ne sont pas reliés rigidement ou mécaniquement, par des entretoises ou analogues.

Pour chaque couche, les éléments 21, 22 et la pale correspondante 17 sont donc réalisés en même temps, l'intervalle 23 entre lesdits éléments 21, 22 et la pale 17 étant compris entre 50 et 500 µm.

Comme indiqué ci-dessus, les éléments 21, 22 servent à maintenir en position la pale correspondante 17 tout au long de sa fabrication afin d'éviter ses déformations. De plus, le maintien de la couche de poudre 2 entre la pale 17 et les éléments 21, 23 a pour effet de limiter la rugosité des surfaces d'intrados 18 et d'extrados 19 de la pale 17.

Après réalisation complète des pales 17, on retire, au moins en partie, la poudre 2 restant dans les intervalles 23 entre les pales 17 et les éléments 21, 22, par exemple par aspiration, soufflage ou vibration.

Ensuite, les pales 17, les éléments 21, 22, le plateau 6 et, le cas échant, les supports 20, sont soumis à un traitement thermique de libération des contraintes résiduelles consistant à chauffer l'ensemble à une température inférieure à la température de frittage de la poudre métallique 2, pendant une durée déterminée.

Lors de ce traitement, des parois minces 24, 25 de la pièce peuvent être maintenues en position l'une par rapport à l'autre à l'aide de brides ou de serre-joints 26. Un exemple de serre-joint 26 reliant deux parois 24, 25 est montré à la figure 4. Chaque serre-joint 26 présente une forme en U et peut être formé couche par couche, par fusion sélective de la poudre 2, en même temps que les pales 17 et que les éléments 21, 22.

Les pales 17 et les éléments 21, 22 sont ensuite séparés du plateau par usinage, par exemple par découpage au fil par électroérosion.

Dans l'invention, les pales 17 étant distinctes des éléments 21, 22, il n'est pas nécessaire de les séparer par usinage, ce qui évite les inconvénients exposés plus haut.

Après séparation et nettoyage complet des pales 17 et des éléments 21, 22, on peut soumettre les pales à un second traitement thermique. Pour cela, les pales 17 sont remontées sur un support, entre les éléments 21, 22, un serre-joint pouvant servir à maintenir l'ensemble. Ce second traitement thermique a pour objectif le détensionnement, le conformage, et/ou le vieillissement des aubes.

Enfin, les pales 17 subissent un traitement de finition, tel par exemple qu'un traitement de tribofinition, de polissage ou d'ébavurage.

Dans l'exemple de réalisation de la figure 3, chaque pale 17 est maintenue par deux supports 21, 22 pleins. Ces supports 21, 22 pourraient toutefois présenter une structure creuse plus rapide à réaliser, comportant par exemple un coeur en nid d'abeille ou des croisillons.

En outre, la pale 17 pourrait être maintenue par un seul élément de maintien et de support 21. Dans ce cas, cet élément est préférentiellement disposé au niveau de la surface d'intrados 18, tournée vers le bas. Comme indiqué ci-dessus, c'est au niveau de cette surface 18 que les problèmes de rugosité sont les plus importants.

Après fabrication, les éléments de support 21, 22 sont fondus et atomisés pour être réutilisés sous forme de poudre métallique.

On s'intéressera dans ce qui suit à la détermination de la distance d entre les éléments de support 21, 22 et la pièce 17, plus particulièrement entre l'élément de support 21 et la pièce 17.

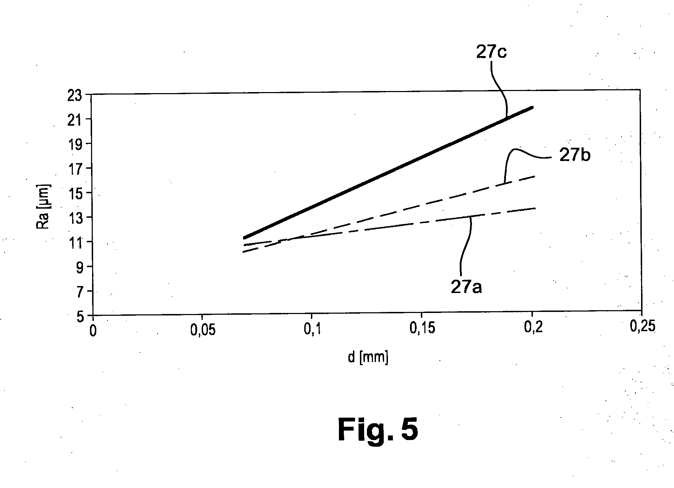

Cette distance est définie à partir d'abaques tels que celui représenté en figure 5, représentant la rugosité Ra de la surface d'intrados 17 (tournée vers le bas) en fonction de la distance d, pour un angle α donné de la surface d'intrados 17 par rapport à la verticale, et par une granulométrie et un matériau donnés de la poudre utilisée.

Dans le cas de la figure 5, le matériau de la poudre est de l'Inco 718 et la granulométrie de la poudre est comprise entre 40 et 50 µm.

Plusieurs courbes 27a, 27b, 27c apparaissent à la figure 5, représentant la rugosité en fonction de la distance d, respectivement par des angles α dé 10, 20 et 30°.

Ainsi, lorsque le type de poudre utilisé et l'angle α de la surface d'intrados 17 sont connus, il est possible, à partir d'une rugosité Ra à obtenir, de déterminer la distance d nécessaire, par lecture de l'abaque.

Il est donc possible de prédire et garantir une homogénéité de rugosité sur les surfaces de la pièce réalisée par fusion sélective de poudre.

Il est à noter que, en dessous d'une certaine valeur (dmin) de la distance d, il existe des risques de collage partiel, voire de collage complet, de l'élément de support et de maintien 21 à la pièce 17.

En outre, au dessus d'une certaine valeur (dmax) de la distance d, cette distance n'a plus d'influence sur la rugosité Ra.

Dans le cas où l'angle α est de 45° et que la poudre est en Inco 718 avec une granulométrie comprise entre 40 et 50 µm, dmin est de l'ordre de 80µm et dmax est de l'ordre de 250 µm.

Dans le cas où l'angle α est de 30° et que la poudre a une granulométrie comprise entre 40 et 50 µm, il est possible d'obtenir une rugosité Ra de l'ordre de 14 µm si la poudre est en Maraging 300, et une rugosité Ra de l'ordre de 11 µm si la poudre est en Inco 718.

Les tests ont montré que les résultats obtenus ne sont pas les mêmes en fonction de la valeur de l'angle α ou en fonction du type de poudre utilisé (matériau, granulométrie).

Les abaques ont été établis par la Demanderesse, par la construction d'éprouvettes présentant plusieurs surfaces inclinées vers le bas, dont les angles varient d'une surface à l'autre. En outre, les éprouvettes ont été construites pour différentes distances d entre les supports et les surfaces concernées. Ceci a permis d'établir la variation de la rugosité Ra en fonction de l'angle α et de la distance d. De tels abaques ont été établis pour plusieurs matériaux différents de poudre (Inco 718, Maraging 300, ...) et pour différentes granulométries.

## Revendications

1. Procédé de fabrication d'une pièce métallique (17) par fusion sélective d'une poudre (2), consistant à :
- former couche par couche (12) sur le plateau (6) et en même temps que la pièce (17), au moins un élément de maintien et de support (21, 22) de la pièce, cet élément (21, 22) étant écarté de la pièce (17) et séparé de celle-ci par un intervalle (23) rempli de poudre (2) non fondue,
- après réalisation complète de la pièce (17), retirer, au moins en partie, la poudre (2) restante dans l'intervalle (23) entre la pièce (17) et l'élément (21, 22), par exemple par aspiration, soufflage ou vibration, et
- séparer la pièce (17) du plateau (6), **caractérisé en ce que** la distance (d) entre l'élément de maintien et de support (21, 22) et la pièce (17) est déterminée à partir d'un abaque, en fonction de paramètres choisis, tels que la rugosité de la pièce à obtenir.

2. Procédé selon la revendication 1, **caractérisé en ce que** l'élément de support (21, 22) est écarté de la pièce (17) d'une distance comprise entre 50 et 500 µm.

3. Procédé selon la revendication 1 ou 2, **caractérisé en ce que** la pièce métallique (17), l'élément de support (21, 22) et le plateau (6) sont soumis à un traitement thermique de libération des contraintes avant leur séparation.

4. Procédé selon la revendication 3, **caractérisé en ce que** le traitement thermique de libération des contraintes consiste à chauffer la pièce métallique (17), l'élément (21, 22) et le plateau (6) à une température inférieure à la température de frittage de la poudre métallique, pendant une durée déterminée.

5. Procédé selon l'une des revendications 1 à 4, **caractérisé en ce que** deux éléments de maintien et de support (21, 22) sont formés couche par couche, en même temps que la pièce (17), de part et d'autre de la pièce (17), lesdits éléments (21, 22) étant écartés de la pièce (7) et séparés de celle-ci par un intervalle (23) rempli de poudre (2) non fondue.

6. Procédé selon l'une des revendications 1 à 5, **caractérisé en ce que** la pièce (17) et les éléments (21, 22) sont construits couche par couche par fusion sélective de la poudre (2) à l'aide d'un faisceau laser, la poudre (2) présentant une granulométrie moyenne comprise entre 10 et 50 µm, ou à l'aide d'un faisceau d'électrons, la poudre (2) présentant une granulométrie moyenne comprise entre 50 et 100 µm.

7. Procédé selon l'une des revendications 1 à 6, **caractérisé en ce que** le ou chaque élément de support (21, 22) est creux et comporte des moyens de rigidification, tels que des croisillons par exemple.

8. Procédé selon l'une des revendications 1 à 7, **caractérisé en ce que** la pièce (17) est séparée du plateau (6) par découpage au fil par électroérosion.

9. Procédé selon l'ensemble des revendications 3 et 5, **caractérisé en ce que**, lors du traitement thermique de libération des contraintes, les deux éléments (21, 22) sont maintenus en position l'un par rapport à l'autre à l'aide d'au moins une bride (6).

10. Procédé selon l'une des revendications 1 à 9, **caractérisé en ce que**, après séparation de la pièce (17) et du plateau (6), la pièce (17) subit un traitement de finition.

## Patentansprüche

1. Verfahren zur Herstellung eines Metallteils (17) durch selektives Schmelzen eines Pulvers (2), das darin besteht:
- auf der Platte (6) gleichzeitig mit dem Teil (17) Schicht für Schicht (12) mindestens ein Halte- und Stützelement (21, 22) für das Teil zu formen, wobei dieses Element (21, 22) von dem Teil (17) abgespreizt wird und von diesem durch ein mit ungeschmolzenem Pulver (2) gefülltem Zwischenraum getrennt wird.
- nach der vollständigen Herstellung des Teils (17) mindestens teilweise das im Zwischenraum (23) zwischen dem Teil (17) und dem Element (21, 22) verbleibende Pulver (2) beispielsweise durch Ansaugung, Blasen oder Vibration zu entfernen, und
- das Teil (17) von der Platte (6) zu trennen, **dadurch gekennzeichnet, dass** der Abstand (d) zwischen dem Halte- und Stützelement (21, 22) und dem Teil (17) bestimmt wird durch ein Diagramm entsprechend der ausgewählten Parameter, wie zum Beispiel der zu erzielenden Rauheit des Teils.

2. Verfahren nach Anspruch 1, **dadurch gekennzeichnet, dass** das Stützelement (21, 22) in 50 bis 500 µm Abstand zum Teil (17) gehalten wird.

3. Verfahren nach Anspruch 1 oder 2, **dadurch gekennzeichnet, dass** das Metallteil (17), das Stützelement (21, 22) und die Platte (6) vor der Trennung einer Entspannungswärmebehandlung unterzogen werden.

4. Verfahren nach Anspruch 3, **dadurch gekennzeichnet, dass** die Entspannungswärmebehandlung darin besteht, das Metallteil (17), das Element (21, 22) und die Platte (6) eine bestimmte Zeit auf eine Temperatur zu erhitzen, die unter der Sintertemperatur des Metallpulvers liegt.

5. Verfahren nach einem der Ansprüche 1 bis 4, **dadurch gekennzeichnet, dass** zwei Halte- und Stützelemente (21, 22) Schicht für Schicht zur gleichen Zeit wie das Teil (17) zu beiden Seiten des Teils (17) geformt werden, wobei besagte Elemente (21, 22) vom Teil (7) abgespreizt und durch ein mit ungeschmolzenem Metallpulver gefüllten Zwischenraum (23) voneinander getrennt werden.

6. Verfahren nach einem der Ansprüche 1 bis 5, **dadurch gekennzeichnet, dass** das Teil (17) und die Elemente (21, 22) Schicht für Schicht durch selektives Schmelzen des Pulvers (2) mit Hilfe eines Laserstrahls geschmolzen werden, wobei das Pulver (2) eine durchschnittliche Körnung zwischen 10 und 50 µm aufweist.

7. Verfahren nach einem der Ansprüche 1 bis 6, **dadurch gekennzeichnet, dass** das bzw. jedes Stützelement (21, 22) hohl ist und Versteifungsmittel, wie zum Beispiel Kreuzstücke, aufweist.

8. Verfahren nach einem der Ansprüche 1 bis 7, **dadurch gekennzeichnet**, das das Teil (17) von der Platte (6) durch Elektroerosion mit einem Schneiddraht getrennt wird.

9. Verfahren nach den Ansprüchen 3 und 5, **dadurch gekennzeichnet, dass** die beiden Elemente (21, 22) bei der Entspannungswärmebehandlung mit mindestens einem Flansch (26) zueinander in Position gehalten werden.

10. Verfahren nach einem der Ansprüche 1 bis 9, **dadurch gekennzeichnet, dass** nach der Trennung des Teils (17) von der Platte (6) das Teil (17) einer Endbearbeitung unterzogen wird.

## Claims

1. A method of fabricating a metal part (17) by selectively melting a powder (2), the method consisting in:
building up layer by layer (12) on a plate (6) and simultaneously with the part (17), at least one holder and support element (21, 22) for the part, the element (21, 22) being spaced apart from the part (17) and being separated therefrom by a gap (23) filled with non-melted powder (2);
after the part (17) has been made completely, removing at least some of the powder (2) remaining in the gap (23) between the part (17) and the element (21, 22), e.g. by suction, blowing, or vibration; and
separating the part (17) from the plate (6), **characterized in that** the distance (d) between the holder and support element (21, 22) and the part (17) is determined using a chart, as a function of selected parameters, such as the roughness of the part that is to be obtained.

2. A method according to claim 1, **characterized in that** the support (21, 22) is spaced apart from the part (17) by a distance lying in the range 50 µm to 500 µm.

3. A method according to claim 1 or 2, **characterized in that** the metal part (17), the support element (21, 22), and the plate (6) are subjected to heat treatment for releasing stresses before they are separated from one another.

4. A method according to claim 3, **characterized in that** the heat treatment for releasing stresses consists in heating the metal part (17), the element (21, 22), and the plate (6) to a temperature lower than the sintering temperature of the metal powder, for a determined duration.

5. A method according to any one of claims 1 to 4, **characterized in that** two holder and support elements (21, 22) are built up layer by layer together with the part (17) one either side of the part (17), said elements (21, 22) being spaced apart from the part (7) and separated therefrom by a gap (23) filled with non-melted powder (2).

6. A method according to any one of claims 1 to 5, **characterized in that** the part (17) and the elements (21, 22) are built up layer by layer by selectively melting the powder (2) with the help of a laser beam, the powder (2) presenting mean grain size lying in the range 10 µm to 50 µm, or with the help of an electron beam, the powder (2) presenting mean grain size lying in the range 50 µm to 100 µm.

7. A method according to any one of claims 1 to 6, **characterized in that** the or each support element (21, 22) is hollow and includes stiffener means, such as cross-bracing, for example.

8. A method according to any one of claims 1 to 7, **characterized in that** the part (17) is separated from the plate (6) by cutting using an electro erosion wire.

9. A method according to claims 3 and 5 taken together, **characterized in that**, during the heat treatment for releasing stresses, the two elements (21, 22) are kept in position relative to each other with the help of at least one flange (26).

10. A method according to any one of claims 1 to 9, **characterized in that**, after the part (17) has been separated from the plate (6), the part (17) is subjected to finishing treatment.
